# EUROPEAN PATENT APPLICATION

(11) **EP 1 624 382 A2**
(43) Date of publication of application: **08.02.2006**
(21) Application number: 05016815.2
(22) Date of filing: 02.08.2005
(51) Int. Cl.: G06F 17/24

(54) **Method, system and program for image processing**

(30) Priority: 03.08.2004 JP 2004226379
(71) Applicant: Riso Kagaku Corporation, Tokyo (JP)
(72) Inventor: Fitzgerald, Damien Riso Kagaku Corp. R&D Center, Inashiki-gun Ibaraki-ken (JP)
(74) Representative: Klunker . Schmitt-Nilson . Hirsch

(57) **Abstract**

In an image processing system, attribute extraction processing is carried out on image information. The attribute extraction processing being processing where attribute data representing the attributes of components forming the image information is extracted on the basis of the image information and the attribute data and image data representing the components are separately generated.

## Description

### BACKGROUND OF THE INVENTION

### Field of the Invention

This invention relates to an image processing method, an image processing system and an image processing program.

### Description of the Related Art

Recently, there has been variously proposed editing software for editing image information formed by characters and/or pictures. The image information edited by the use of such editing software can be printed by outputting it to printers including a stencil printer. When multi color stencil printing is to be made by the use of a plurality of stencils formed on the basis of image information edited by the use of such editing software, in the past, it has been necessary for the operator to carry out stencil separation, where a piece of image information is divided into a plurality of pieces of image information corresponding to stencils of colors to be made, prior to making stencils, which has been a heavy load for unskilled operators. Accordingly, there has been proposed software for stencil separation by the use of which stencil separation can be easily carried out on the basis of image information edited by the use of the editing software.

As such software for stencil separation, there has been known, for instance, that where colors can be allotted by components on the basis of image information converted to a bit map file, whose extension is prn, by a printer driver, and the stencil separation is automatically carried out by the allotted colors. See homepage of RISO co. shown 8/2, 2004: Internet <URL:http://www.riso.co.jp/catalog/paret.html>

However, the software for stencil separation has a problem that in the case where a character part and a picture part are superposed one on another, and the stencil separation in which colors are separately allotted to the character part and the picture part cannot be performed.

### SUMMARY OF THE INVENTION

In view of the foregoing observations and description, the primary object of the present invention is to provide an image processing method, an image processing system and an image processing program which can allot colors by the components and a suitable stencil separation can be performed even if the components are superposed one on another, for instance, when the stencil separation is performed on image information by software for stencil separation, or the like.

In accordance with the present invention, there is provided an image processing method comprising the step of carrying out attribute extraction processing on image information, the attribute extraction processing being processing where attribute data representing the attributes of components forming the image information is extracted on the basis of the image information and the attribute data and image data representing the components are separately generated.

In the image processing method, it is possible to generate the attribute data and the image data so that the image information can be reedited by the use of the attribute data and the image data.

Further, it is possible to allot colors to components of the image data by the use of the attribute data and the image data and to carry out stencil separation, where the image data is divided by the allotted color, on the image data.

Further, the image information may be output from a plurality of kinds of image editing means for editing an image.

Further, it is possible to carry out the attribute extraction processing in a plug-in of an image editing means for editing the image.

Further, it is possible to carry out the attribute extraction processing in a driver of an image forming means for forming the image of the image information.

Further, it is possible to carry out the attribute extraction processing on image information output from a part of a plurality of kinds of image editing means in a plug-in of the part of image editing means and to carry out the attribute extraction processing on image information output from the other part of the plurality of kinds of image editing means in a driver of an image forming means for forming the image of the image information.

Further, it is possible to extract the attribute data in a file format in the attribute extraction processing.

Further, it is possible to generate the image data in a file format in the attribute extraction processing.

In accordance with the present invention, there is further provided an image processing system characterized by having an attribute data extracting means which carries out attribute extraction processing on image information, the attribute extraction processing being processing where attribute data representing the attributes of components forming the image information is extracted on the basis of the image information and the attribute data and image data representing the components are separately generated.

In the image processing system, the attribute data extracting means may generate the attribute data and the image data so that the image information can be reedited by the use of the attribute data and the image data.

Further, the image processing system may be further provided with a color allotting means which makes it feasible to allot colors to components of the image data by the use of the attribute data and the image data and with a stencil separating means which carries out stencil separation, where the image data is divided by the allotted color, on the image data.

Further, the image information may be output from a plurality of kinds of image editing means for editing an image.

Further, the attribute data extracting means may be provided in a driver of an image forming means for forming the image of the image information.

Further, the attribute data extracting means may be a plug-in of an image editing means for editing the image.

Further, the attribute data extracting means may be divided into a first attribute data extracting portion which carries out the attribute extraction processing on image information output from a part of a plurality of kinds of image editing means and a second attribute data extracting portion which carries out the attribute extraction processing on image information output from the other part of the plurality of kinds of image editing means while the first attribute data extracting portion comprises a plug-in of the part of image editing means and the second attribute data extracting portion is provided in a driver of an image forming means for forming the image of the image information.

Further, it is possible to extract the attribute data in a file format in the attribute extraction processing.

Further, it is possible to generate the image data in a file format in the attribute extraction processing.

In accordance with the present invention, there is further provided an image processing program for causing a computer to execute a procedure of carrying out attribute extraction processing on image information, the attribute extraction processing being processing where attribute data representing the attributes of components forming the image information is extracted on the basis of the image information and the attribute data and image data representing the components are separately generated.

In the image processing program, the attribute extraction processing may be processing which generates the attribute data and the image data so that the image information can be reedited by the use of the attribute data and the image data.

Further, the image processing program may further comprise a procedure of making it feasible to allot colors to components of the image data by the use of the attribute data and the image data and a procedure of carrying out stencil separation on the image data, where the image data is divided by the allotted color.

Further, the image information may be output from a plurality of kinds of image editing means for editing an image.

Further, the attribute extraction processing may be executed in a driver of an image forming means for forming the image of the image information in a computer.

Further, the attribute extraction processing may be executed in a plug-in of an image editing means for editing the image in a computer.

Further, the attribute extraction processing may be divided into a processing to be executed in a plug-in of an image editing means for editing the image in a computer and a processing to be executed in a driver of an image forming means for forming the image of the image information in a computer while the attribute extraction processing on image information output from a part of a plurality of kinds of image editing means is carried out in the plug-in of the part of image editing means and the attribute extraction processing on image information output from the other part of the plurality of kinds of image editing means is carried out in the driver of the image forming means for forming the image of the image information.

Further, it is possible to extract the attribute data in a file format in the attribute extraction processing.

Further, it is possible to generate the image data in a file format in the attribute extraction processing.

The "components" as used here means, for instance, a character, a picture or a figure.

Further, the "attribute data" represents the location of the corresponding component in the image information and the kind of the component such as a character, a picture or a figure.

In allotting colors, a plurality of colors may be allotted to one component without limited to one color to one component.

The image processing program may be recorded in a computer readable medium. A skilled artisan would know that the computer-readable medium is not limited to any specific type of storage devices and includes any kind of device, including but not limited to CDs, floppy disks, RAMs, ROMs, hard disks, magnetic tapes and internet downloads, in which computer instructions can be stored and/or transmitted. Transmission of the computer code through a network or through wireless transmission means is also within the scope of this invention. Additionally, computer code/instructions include, but are not limited to, source, object and executable code and can be in any language including higher level languages, assembly language and machine language.

In accordance with an image processing method, an image processing system and an image processing program of the present invention, since attribute extraction processing, where attribute data representing the attributes of components forming the image information is extracted on the basis of the image information and the attribute data and image data representing the components are separately generated, is carried out on image information, colors can be allotted by the components on the basis of the attribute data and the image data and a suitable stencil separation can be performed even if the components, e.g., a character and a picture, are superposed one on another by making it possible to separate the image information by the use of the attribute data and the image data in the software for stencil separation described above.

Further, when the image information is output from a plurality of kinds of image editing means for editing an image, versatility can be given since the attribute extracting processing can be carried out on image information irrespective of data format of the image information.

Further, when the attribute extraction processing is carried out on image information output from a part of a plurality of kinds of image editing means in a plug-in of the part of image editing means and the attribute extraction processing is carried out on image information output from the other part of the plurality of kinds of image editing means in a driver of an image forming means for forming the image of the image information, the attribute extraction processing can be carried out on both the image information output from the image editing means which can be and cannot be provided with a plug-in and more versatility can be given.

When the attribute extraction processing is carried out in a driver of an image forming means for forming the image of the image information, the above-mentioned effect can be obtained by slightly changing the existing driver.

Further, when the attribute extraction processing is carried out in a plug-in of an image editing means for editing the image, the program for carrying out the attribute extraction processing can be small in size.

Further, when the attribute data an/or the image data is generated in a file format, handling and/or management thereof is facilitated.

### BRIEF DESCRIPTION OF THE DRAWINGS

Figure 1 is a view showing in brief an image processing system in accordance with an embodiment of the present invention,
Figure 2 is a view showing an example of image information to be edited by the first editing software of the image processing system shown in Figure 1,
Figure 3 is a view for illustrating the method of starting the printer driver in the image processing system shown in Figure 1,
Figure 4 is a view for illustrating the method of causing the attribute extracting processing in the printer driver,
Figure 5 is a view showing the attribute data file and the image data file recorded in a predetermined folder,
Figure 6 is a view showing an example of image information to be edited by the second editing software of the image processing system shown in Figure 1,
Figure 7 is a view for illustrating the method of starting the plug-in in the image processing system shown in Figure 1,
Figure 8 is a view for illustrating the method of selecting a predetermined layer forming the image information in the plug-in,
Figure 9 is a view showing the screen after selection of the predetermined layer in Figure 8,
Figure 10 is a view for illustrating the method of attaching a text attribute to the layer selected in Figure 8 to generate an attribute data file,
Figure 11 is a view showing the attribute data file and the image data file recorded in a predetermined folder,
Figure 12 is a view showing the screen when the software for stencil separation of the image processing system shown in Figure 1,
Figure 13 is a view for illustrating the method of selecting predetermined characters in the software for stencil separation, and
Figure 14 is a view showing the frame displayed after the predetermined characters are selected in the software for stencil separation.

### DESCRIPTION OF THE PREFERRED EMBODIMENT

An image processing system in accordance with the present invention will be described, hereinbelow, with reference to the drawings.

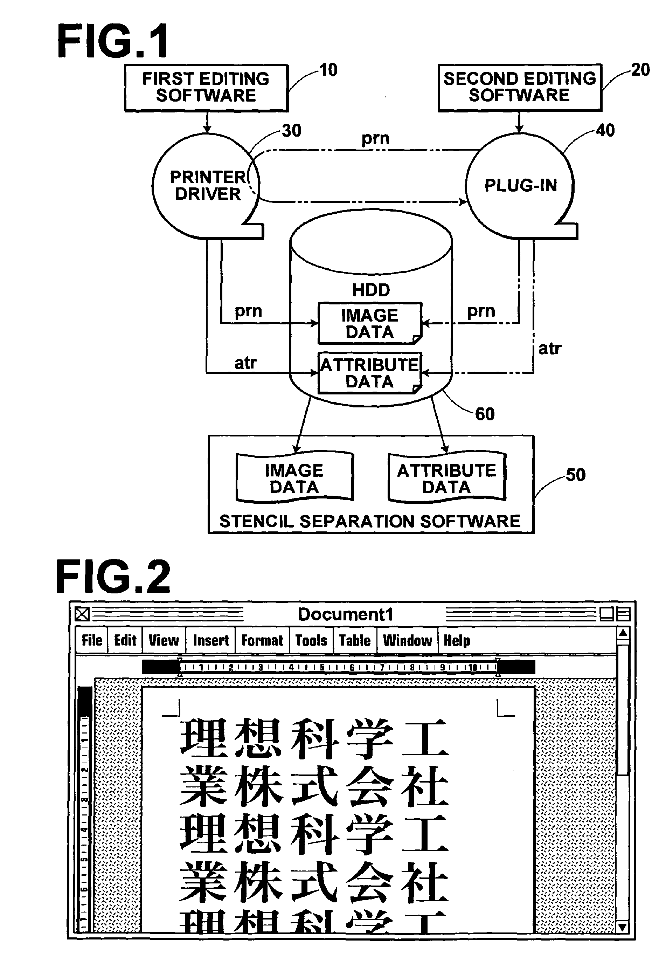

The image processing system is so-called a personal computer and as shown in Figure 1, is installed with a document creation application which can mainly edit image information formed by characters (e.g., Microsoft Word ® ) as a first editing software 10 and a picture creation application which can mainly edit image information formed by pictures and illustrations (e.g., Adobe photoshop ®) as a second editing software 20.

The image processing system is further installed with a printer driver 30 provided with a first attribute data extraction portion which performs the attribute extraction processing on the image information edited by the first editing software 10, and a plug-in 40 as a second attribute data extraction portion which performs the attribute extraction processing on the image information edited by the second editing software 20. In this embodiment, the first and second attribute data extraction portions form the attribute data extracting means in the image processing system of the present invention.

The "attribute extraction processing" as used here is processing where attribute data representing the attributes of components forming the image information is extracted on the basis of the image information edited by the first editing software 10 or the second editing software 20 and the attribute data and image data representing the components are separately generated.

The image processing system is further installed with stencil separation software 50 into which the attribute data extracted by the printer driver 30 or the plug-in 40 and image data are input and which can reedit the image information on the basis of the attribute data and the image data. The stencil separation software 50 can display, for instance, an image on a monitor on the basis of image data extracted by the printer driver 30 or the plug-in 40 so that predetermined components can be selected on the displayed image on the basis of the attribute data, and makes it feasible to allot predetermined colors to the selected components. The stencil separation software 50 automatically generates files for pieces of image data by the allotted colors, and output them to a stencil printer connected to the image processing system.

The image processing system further comprises a hard disc 60 in which the attribute data and/or the image data is temporarily stored.

Operation of the image processing system will be described, hereinbelow.

A method of making the image information edited by the first editing software 10 be in a format which can be reedited in the stencil separation software 50 will be first described.

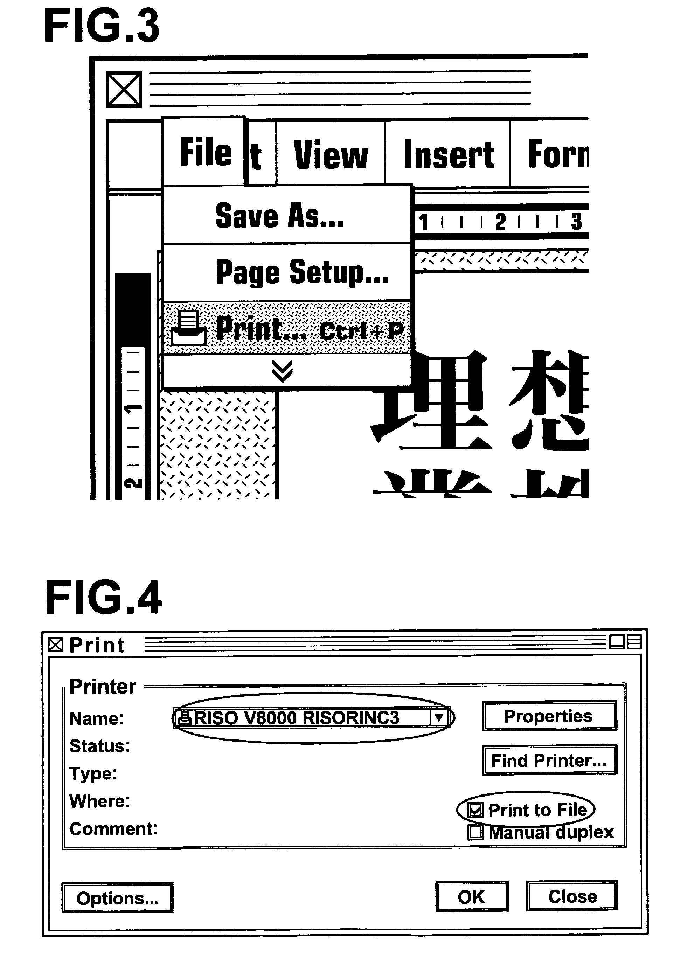

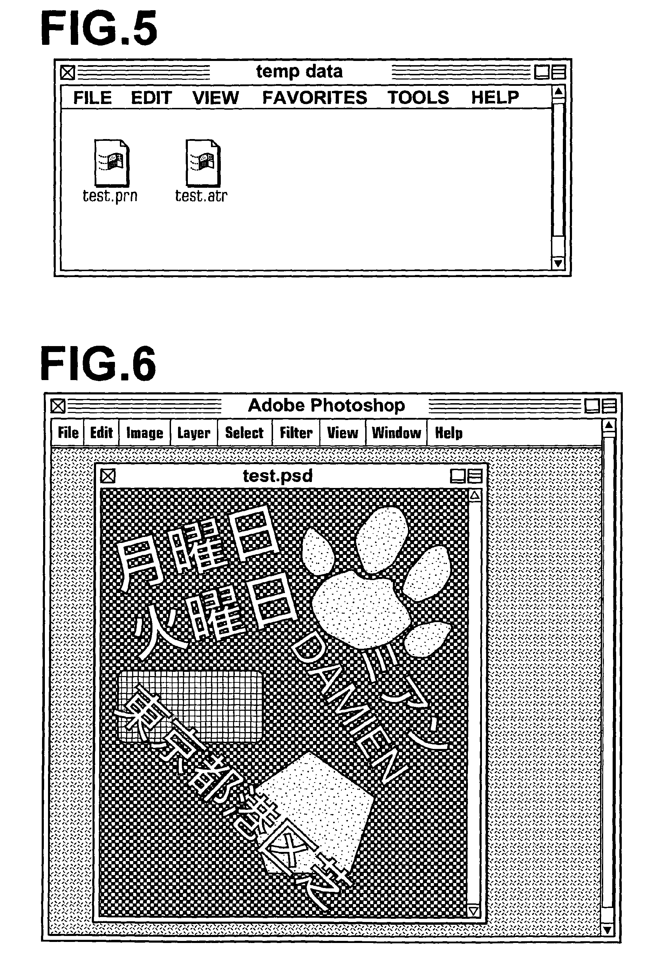

An image information such as shown in Figure 2 is first edited by the first editing software 10 in the image processing system. In order to make the image information edited in the manner described above be in a format which can be reedited in the stencil separation software 50, the File menu on the menu bar in the window screen displayed by the first editing software 10 as shown in Figure 3 is selected, and the Print menu in the File menu is selected. By this, a window screen such as shown in Figure 4 is displayed. In the field of Printer in the window screen, a printer driver (e.g., RISO V800 RISORINC3 in Figure 4) of a printer to which the image processing system is connected is selected and at the same time, check box "Print to file" is checked to represent that the edited image information is to be output in a file format. When the OK button is depressed in this state, image information is output from the first editing software 10 to the printer driver 30 and in the printer driver 30, attribute data representing attributes of the components forming the image information is extracted and a file comprising the attribute data and a file comprising image data representing the components are generated. Then the file comprising the attribute data and the file comprising the image data are recorded in the hard disc 60 as test.atr and test.prn, respectively. The file test.prn is a file of raster data, whereas the file test.atr is an attribute data file provided with an attribute of text. The files test.atr and test.prn are recorded in a predetermined folder (in this particular embodiment, in folder "temp data") as shown in Figure 5.

Next a method of making the image information edited by the second editing software 20 be in a format which can be reedited will be described.

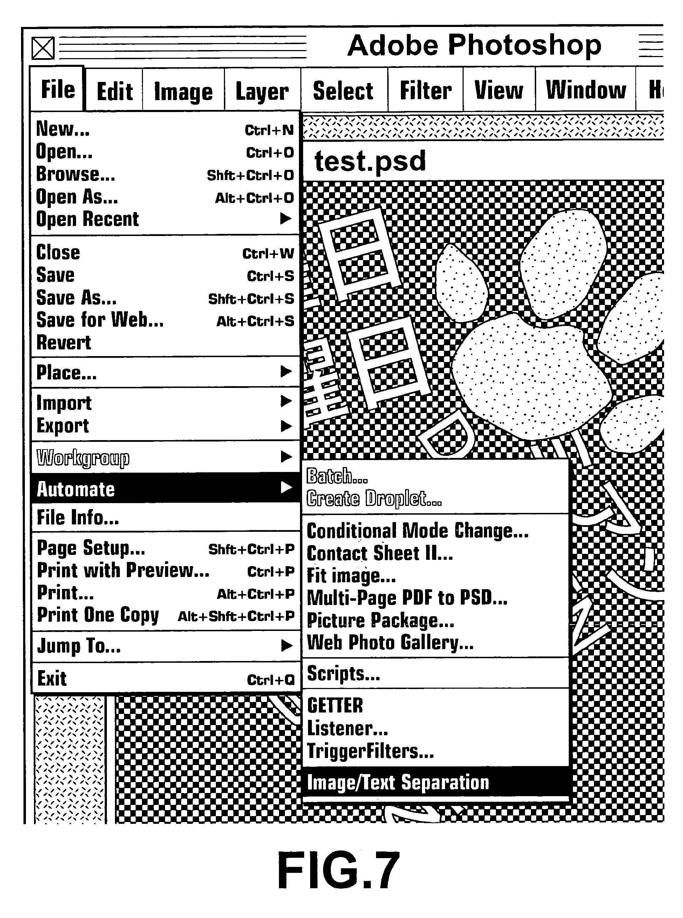

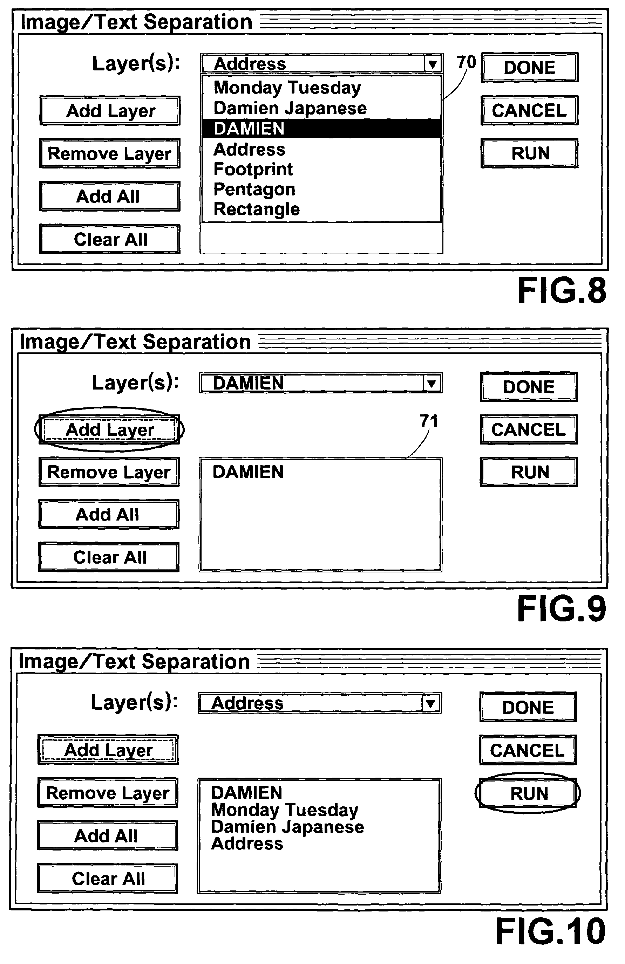

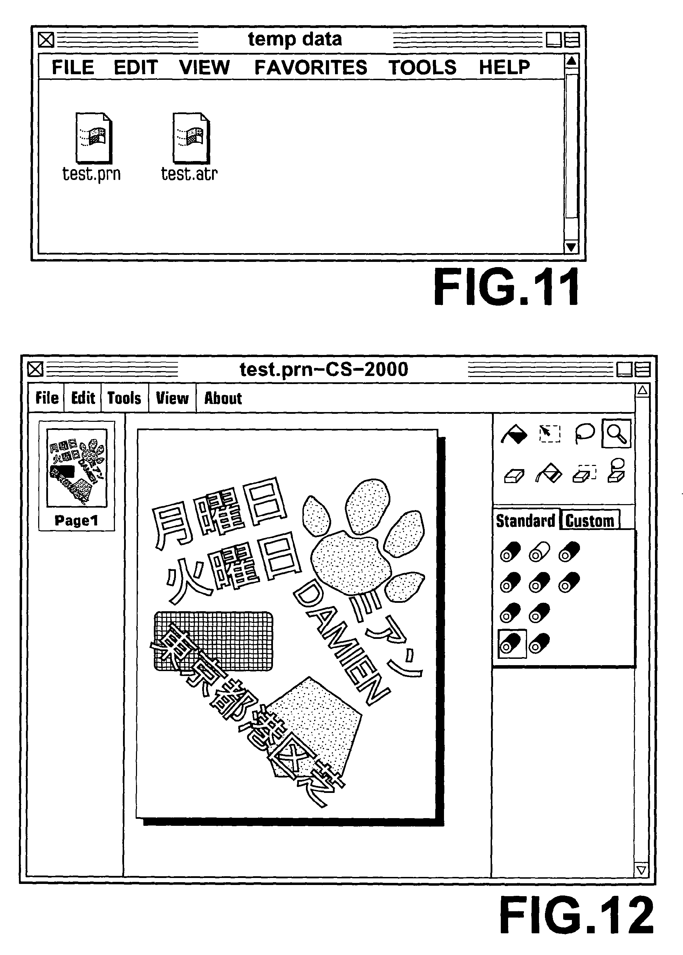

An image information such as shown in Figure 6 is first edited by the second editing software 20 in the image processing system. In order to make the image information edited in the manner described above be in a format which can be reedited in the stencil separation software 50, the File menu on the menu bar in the window screen displayed by the second editing software 20 as shown in Figure 7 is selected, and an Image/Text Separation plug-in 40 in Automate in the File menu is executed. By this, a list of layers (Monday Tuesday, Damien Japanese, DAMIEN, Address, Footprint, Pentagon, Rectangle in Figure 8) forming the image information now edited by the second editing software 20 is displayed in a combo box 70 as shown in Figure 8. The layers displayed here include both those having an attribute of a text and those having an attribute of a picture. Then those to be handled as having an attribute of a text upon reedition are selected from the layers displayed in the combo box 70 and an Add Layer button is clicked, whereby the layer DAMIEN is added to a text layer list 71 as shown in Figure 9. After all the layers to be provided with the attribute of the text are added to the text layer list 71, RUN button is clicked, whereby an attribute data file where all the layers in the text layer list 71 are provided with the attribute of the text is generated and recorded in the hard disc 60 in a file name of test.atr. In parallel to the processing described above, the Image/Text Separation plug-in 40 calls the printer driver 30 in the background, obtains image data for printing on the basis of the image information on edition, and records in the hard disc 60 in a file name of test.prn. The files test.atr and test.prn are recorded in a predetermined folder (in this particular embodiment, in folder "temp data") as shown in Figure 11. The files test.atr and test.prn may be output as one synthesized file. The file test.prn may be obtained by selecting "output to file" option of the printer driver 30 and issuing an instruction to print without outputting the file test.prn by the plug-in 40.

A method of reediting the image information by the use of the attribute data file and the image data file thus prepared will be described next.

The stencil separation software 50 installed in the image processing system is started and the image data file test.prn is opened in the software, whereby, for instance, a window screen such as shown Figure 12 is displayed. In the window screen, the image information to be reedited is displayed at the middle of the screen and a contracted image of the image information is displayed on the left side thereof. When there are a plurality of pages of image information, contracted images of all the pages are simultaneously displayed and which contracted image is to be displayed in an enlarged scale at the middle of the screen can be selected. Further, an edition function selecting portion for reediting the image information is displayed on the right side of the window screen.

When a part of the character is clicked, the location of the character is recorded and the data in the attribute data file test. atr corresponding to the location is referred.

Here, in the attribute data file test.atr, different pieces of color information allotted by the attributes of components of the image information are stored. For example, a value representing black is stored in the case of a character and a value representing white is stored in the case of a picture.

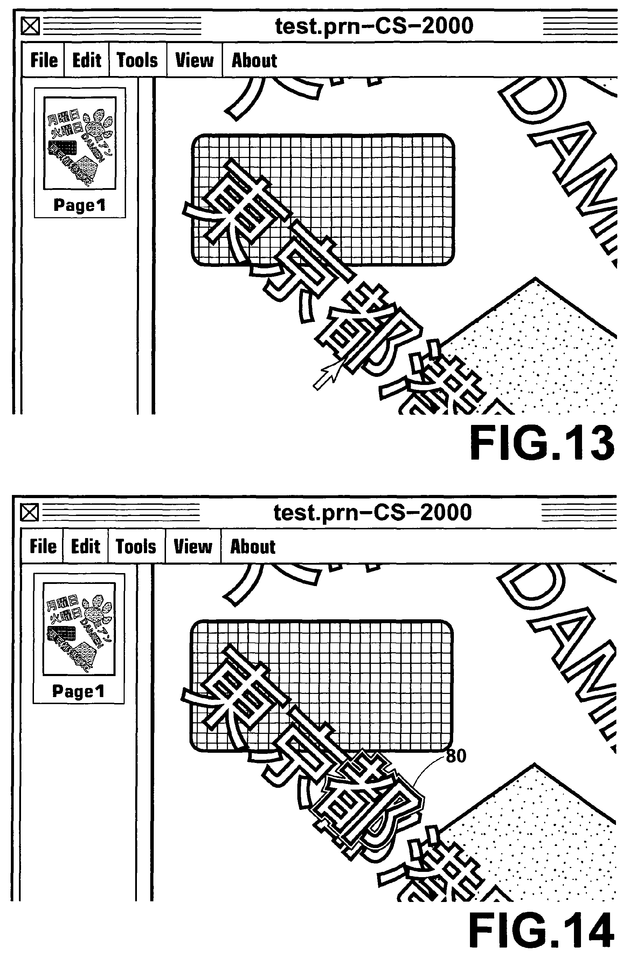

Accordingly, when a part of the character is clicked, the color information on the location is checked and the area where the color information is the same in value as the checked color information and which is continuous to the location is selected. For example, when a part of the character 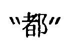 is clicked as shown in Figure 13, the area continuous to the location is only the part except the 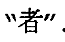 . However, in the case of the character, not only the value on the clicked location but also the values at a predetermined distance from the clicked location is confirmed, and the area where the color information is the same in value as the checked color information and which is continuous to the location is selected. That is, when a part of the character 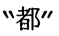 is clicked as shown in Figure 13, not only the clicked part but also the other part of the character is selected and the whole of the character 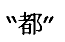 is after all selected.

By confirming the location of the components on the basis of the values representing the color information in the manner described above, even if, for instance, the characters and the pictures are superposed one on another, the former can be clearly separated from the latter. The attribute data may be made so that the illustrations can be separated in addition to the characters and the pictures.

When the whole of the character is selected, a frame 80 of the character is displayed as shown in Figure 14. By the use of the edition function selecting portion displayed on the right side of the window screen, the color of only the character selected in the manner described above can be set. More specifically, by selecting the display of a printing drum of a predetermined printing color in the edition function selecting portion, the printing color can be allotted to the character. By allotting the colors in this manner, allotment of the colors can be facilitated and the images to be actually printed can be confirmed before printing.

The components such as other characters, pictures or illustrations are selected in the same manner as described above, and predetermined colors are allotted to the respective components. After allotment of colors, the stencil separation software 50 again stores the files as one file in the hard disc 60.

When printing after colors are allotted as described above, the file stored in the hard disc 60 is read out and the prn files for the respective allotted colors are generated on the basis of the file. Then the stencil separation software 50 outputs the prn files to a stencil printer according to the order of colors instructed by the operator.

The stencil printer receives the prn files output from the stencil separation software 50 and makes multi color stencil printing by making the stencils and print according to the prn files in the order of receipt of the prn files.

In accordance with an image processing method, an image processing system and an image processing program of the embodiment described above, since the attribute extraction processing, where the attribute data representing the attributes of components forming the image information is extracted and the attribute data and image data representing the components are separately generated, is carried out on image information, colors can be allotted by the components on the basis of the attribute data and the image data in the color separation software 50 even if the components are superposed one on another and a suitable stencil separation can be performed.

Further, though, in the embodiment described above, the attribute extraction processing is carried out in the printer driver 30 on the image information output from the first editing software 10 while the attribute extraction processing is carried out in the plug-in 40 on the image information output from the second editing software 20, the attribute extraction processing may be carried out in one of the printer driver 30 and the plug-in 40 on the basis of both the image information output from the first editing software 10 and the image information output from the second editing software 20.

Further, though, in the embodiment described above, the first editing software 10 is in the form of a document creation application such as Microsoft Word ® and the second editing software 20 is in the form of a picture creation application such as Adobe photoshop ®, the image information output from other editing software may be input into the printer driver 30 or the plug-in 40 to perform the attribute extracting processing. Further, in this case, for instance, when the data format of the image information input into the plug-in 40 is in a format in which the attribute extraction processing cannot be carried out in the plug-in 40, the image information may be output from the plug-in 40 to the printer driver 30 so that the attribute extraction processing is carried out on the image information in the printer driver 30.

## Claims

1. An image processing method comprising the step of carrying out attribute extraction processing on image information, the attribute extraction processing being processing where attribute data representing the attributes of components forming the image information is extracted on the basis of the image information and the attribute data and image data representing the components are separately generated.

2. An image processing method as defined in Claim 1 further comprising the step of generating the attribute data and the image data so that the image information can be reedited by the use of the attribute data and the image data.

3. An image processing method as defined in Claim 2 further comprising the steps of
allotting colors to components of the image data by the use of the attribute data and the image data and
carrying out stencil separation, where the image data is divided by the allotted color, on the image data.

4. An image processing method as defined in any one of Claims 1 to 3 in which the image information is output from a plurality of kinds of image editing means (10, 20) for editing the image.

5. An image processing method as defined in any one of Claims 1 to 4 in which the attribute extraction processing is carried out in a plug-in (40) of an image editing means (20) for editing the image.

6. An image processing method as defined in any one of Claims 1 to 4 in which the attribute extraction processing is carried out in a driver (30) of an image forming means for forming the image of the image information.

7. An image processing method as defined in Claim 4 in which the attribute extraction processing on image information output from a part (20) of a plurality of kinds of image editing means (10, 20) is carried out in a plug-in (40) of the part of image editing means and the attribute extraction processing on image information output from the other part (10) of the plurality of kinds of image editing means (10, 20) is carried out in a driver (30) of an image forming means for forming the image of the image information.

8. An image processing method as defined in any one of Claims 1 to 7 in which the attribute data is extracted in a file format in the attribute extraction processing.

9. An image processing method as defined in any one of Claims 1 to 8 in which the image data is generated in a file format in the attribute extraction processing.

10. An image processing system **characterized by** having an attribute data extracting means (30, 40) which carries out attribute extraction processing on image information, the attribute extraction processing being processing where attribute data representing the attributes of components forming the image information is extracted on the basis of the image information and the attribute data and image data representing the components are separately generated.

11. An image processing system as defined in Claim 10 in which the attribute data extracting means (30, 40) generates the attribute data and the image data so that the image information can be reedited by the use of the attribute data and the image data.

12. An image processing system as defined in Claim 11 further comprising
a color allotting means which makes it feasible to allot colors to components of the image data by the use of the attribute data and the image data
and a stencil separating means which carries out stencil separation, where the image data is divided by the allotted color, on the image data.

13. An image processing system as defined in any one of Claims 10 to 12 in which the image information is output from a plurality of kinds of image editing means (10, 20) for editing an image.

14. An image processing system as defined in any one of Claims 10 to 13 in which the attribute data extracting means is provided in a driver (30) of an image forming means for forming the image of the image information.

15. An image processing system as defined in any one of Claims 10 to 13 in which the attribute data extracting means is a plug-in (40) of an image editing means for editing the image.

16. An image processing system as defined in Claim 13 in which the attribute data extracting means is divided into a first attribute data extracting portion which carries out the attribute extraction processing on image information output from a part of a plurality of kinds of image editing means (10, 20) and a second attribute data extracting portion which carries out the attribute extraction processing on image information output from the other part of the plurality of kinds of image editing means (10, 20) wherein
the first attribute data extracting portion comprises a plug-in (40) of the part of image editing means and
the second attribute data extracting portion is provided in a driver (30) of an image forming means for forming the image of the image information.

17. An image processing system as defined in any one of Claims 10 to 16 in which the attribute data is extracted in a file format in the attribute extraction processing.

18. An image processing system as defined in any one of Claims 10 to 17 in which the image data is generated in a file format in the attribute extraction processing.

19. An image processing program for causing a computer to execute a procedure of carrying out attribute extraction processing on image information, the attribute extraction processing being processing where attribute data representing the attributes of components forming the image information is extracted on the basis of the image information and the attribute data and image data representing the components are separately generated.

20. An image processing program as defined in Claim 19 in which the attribute extraction processing is processing which generates the attribute data and the image data so that the image information can be reedited by the use of the attribute data and the image data.

21. An image processing program as defined in Claim 20 further comprising
a procedure of making it feasible to allot colors to components of the image data by the use of the attribute data and the image data and
a procedure of carrying out stencil separation on the image data, where the image data is divided by the allotted color.

22. An image processing program as defined in any one of Claims 19 to 21 in which the image information is output from a plurality of kinds of image editing means (10, 20) for editing an image.

23. An image processing program as defined in any one of Claims 19 to 22 in which the attribute extraction processing is executed in a driver (30) of an image forming means for forming the image of the image information in a computer.

24. An image processing program as defined in any one of Claims 19 to 22 in which the attribute extraction processing is executed in a plug-in (40) of an image editing means for editing the image in a computer.

25. An image processing program as defined in Claim 22 in which the attribute extraction processing is divided into a processing to be executed in a plug-in (40) of an image editing means for editing the image in a computer and a processing to be executed in a driver (30) of an image forming means for forming the image of the image information in a computer wherein
the attribute extraction processing on image information output from a part of a plurality of kinds of image editing means is carried out in the plug-in of the part of image editing means and the attribute extraction processing on image information output from the other part of the plurality of kinds of image editing means is carried out in the driver of the image forming means for forming the image of the image information.

26. An image processing program as defined in any one of Claims 19 to 25 in which the attribute data is extracted in a file format in the attribute extraction processing.

27. An image processing program as defined in any one of Claims 19 to 26 in which the image data is generated in a file format in the attribute extraction processing.
